# EUROPÄISCHE PATENTSCHRIFT

(11) **EP 1 469 564 B1**
(45) Veröffentlichungstag und Bekanntmachung des Hinweises auf die Patenterteilung: **05.12.2012**
(21) Anmeldenummer: 04008807.2
(22) Anmeldetag: 14.04.2004
(51) Int. Cl.: H01R 13/637, H01R 11/28, H01H 39/00, H01M 2/34

(54) **Pyromechanisches Batteriepol-Trennelement**
Pyrotechnical battery terminal
Borne de batterie pyrotechnique

(30) Priorität: 17.04.2003 DE 10317757; 19.08.2003 DE 10337980
(43) Veröffentlichungstag der Anmeldung: 20.10.2004
(73) Patentinhaber: Autoliv Development AB, 447 83 Vårgårda (SE)
(72) Erfinder: Brede, Uwe, 90765 Fuerth (DE); Albrecht, Uwe, 90478 Nürnberg (DE)
(74) Vertreter: Becker, Thomas

(56) Entgegenhaltungen:
- EP-A- 0 936 647
- FR-A- 2 775 539
- US-B1- 6 232 568

## Beschreibung

Die Erfindung betrifft ein pyromechanisches Batteriepol-Trennelement nach dem Oberbegriff des Anspruchs 1.

Bekannt sind pyromechanische Trennelemente zum Durchtrennen von Kabeln, Seilen usw. Grundsätzlich wird mit einem ein Antriebsgas erzeugenden pyrotechnischen Element ein Kolben an dessen Wirkungsseite ein Meißel, ein Messer oder ein Stanzelement angeordnet ist, betrieben. Diese pyromechanischen Trennelemente wirken jedoch ganz wesentlich mit der umgebenden Einbaugeometrie zusammen. In der Regel werden die Stromleiter und die auf dem Batteriepol montierten Batterieklemmen aus mehreren Bausteinen zusammengefügt, wodurch die Montage erschwert ist. Ebenfalls ist es problematisch, wenn an den Stromleitungen dicke Kabellitzen angeklemmt werden, die auf Grund der niederohmigen Forderung mit sehr starken Kontaktschrauben befestigt werden müssen. Befindet sich eine derartige Batterieklemme auf dem Pol einer Batterie, so können durch Vibrationen und Stöße des Fahrzeuges erhebliche mechanische Schwingungsbelastungen auf diese Polklemme einwirken. Die Folge kann Bruch des Stromleiters sein.

Ein Batteriepol-Trennelement gemäß dem Oberbegriff des Anspruchs 1 ist aus der FR-A-2 775 539 bekannt.

Die Aufgabe der Erfindung besteht darin, einen kompletten Stromleiter als Batterieklemme so aufzubauen, dass er in ein Armierungsgehäuse gesteckt werden kann und von äußeren mechanischen Belastungen an der Trennstelle freigehalten wird, wobei das das pyrotechnische Trennelement und der Stromleiter in einer einfachen aber äußerst festsitzenden Weise in das Batterieklemmengehäuse eingebaut werden können und ein nach Zerstörung der Trennstelle abgetrennter Abschnitt des Stromleiters vor einem Herausfallen aus dem Gehäuse gesichert sein soll.

Zur Lösung der Aufgabe ist ein pyromechanisches Batteriepol-Trennelement mit den Merkmalen des Anspruchs 1 vorgesehen.

Eine bevorzugte Ausführungsform zeichnet sich dadurch aus, dass auf dem ersten Schenkel die Trennstelle und ausgehend von der Klemmvorrichtung dahinter ein erstes Befestigungselement zum Anschließen der im Notfall abzuschaltenden Aggregate angeordnet ist, und dass auf dem zweiten Schenkel ein zweites Befestigungselement zum Anschließen der im Notfall nicht abzuschaltenden Aggregate angeordnet ist.

Vorteilhafterweise weist das Gehäuse Versteifungsrippen und/oder Stege auf und das Batterieklemmenelement und das Wirkelement sind in diese Versteifungsrippen und/oder Stege einschiebbar.

Die Verdickung ist bevorzugt am ersten Schenkel des Batterieklemmenelements zwischen der Trennstelle und dem ersten Befestigungselement angeordnet und zwischen den Rippen im Gehäuse eingeklemmt.

In bevorzugter Ausführungsform ist das zweite Befestigungselement eine Stützpunktschraube und das erste Befestigungselement eine Befestigungsbohrung.

In bevorzugter Ausführungsform ragen vom Batterieklemmenelement nur die Befestigungselemente aus dem Gehäuse heraus.

Vorteilhafterweise sind die Schenkel des Batterieklemmenelements in der Art eines Flachbandes ausgebildet.

Das Gehäuse des Batteriepol-Trennelements ist zur Verstärkung bevorzugt aus einem faserverstärkten Kunststoff hergestellt.

Erfindungsgemäß wird also vorgeschlagen, in ein spezielles Stützgehäuse die komplette Stromabnehmerklemme incl. der pyromechanischen Trennstelle so einzuschieben, das die inneren Armierungstege die einstückige Batterieklemme mit Trennstelle und das pyrotechnische Wirkungselement so abstützt, dass der gesamte Wirkungsverbund als kompakte Baueinheit in einem geschlossenen Gehäuse untergebracht ist.

Die Erfindung wird nachstehend an Hand von Figuren näher beschrieben.

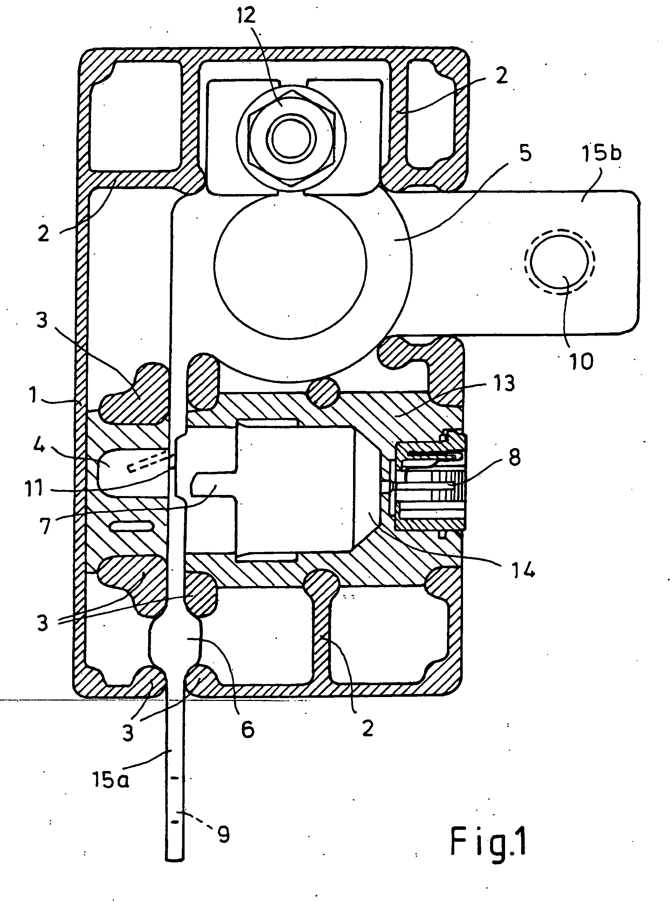

Figur 1 zeigt von oben gesehen einen Schnitt durch das pyromechanische Batteriepol-Trennelement. In einem faserverstärkten Kunststoffgehäuse 1 sind Versteifungsrippen verschiedener Art 2, 3 angeordnet. Diese Versteifungsrippen oder Stege sind so angeordnet, dass sie das komplette Batterieklemmenelement 5 durch Einstecken aufnehmen können. Gleichzeitig kann das in einem Gehäuse 13 angeordnete Wirkelement 14 mit dem Trennelement 7 in die Stege des Gehäuses 1 eingeschoben werden. Die Armierungstege 2, 3 klemmen sowohl das Batterieklemmenelement 5 als auch das Gehäuse 13 des Wirkelements 14 so fest ein, das sich zwischen der Trennstelle 11 und dem Trennelement 7 ein definierter Freiflug ausbilden kann. Zur Sicherung und mechanischen Entlastung gegen Biegeschwingungen ist an dem Stromleiter des Batterieklemmenelements 5 an der Stelle 6 eine definierte Verdikkung angebracht. Zur Befestigung des kompletten Systems ist eine allgemein bekannte Klemmvorrichtung 12 vorgesehen, die das komplette pyromechanische Batteriepol-Trennelement auf dem Pluspolzapfen der Batterie festhält. Das einstückige Batterieklemmenelement 5 besitzt eine elektrische Stützpunktschraube als zweites Befestigungselement 10 auf dem zweiten Schenkel 15b, die auch bei einer Trennung die elektrische Versorgung für Notversorgungsaggregate aufrecht erhält, sowie eine Befestigungsbohrung als erstes Befestigungselement 9 an dem Schenkel 15a der Batterieklemme, die durch Zerstörung der Trennstelle 11 elektrisch von der Polklemme isoliert wird.

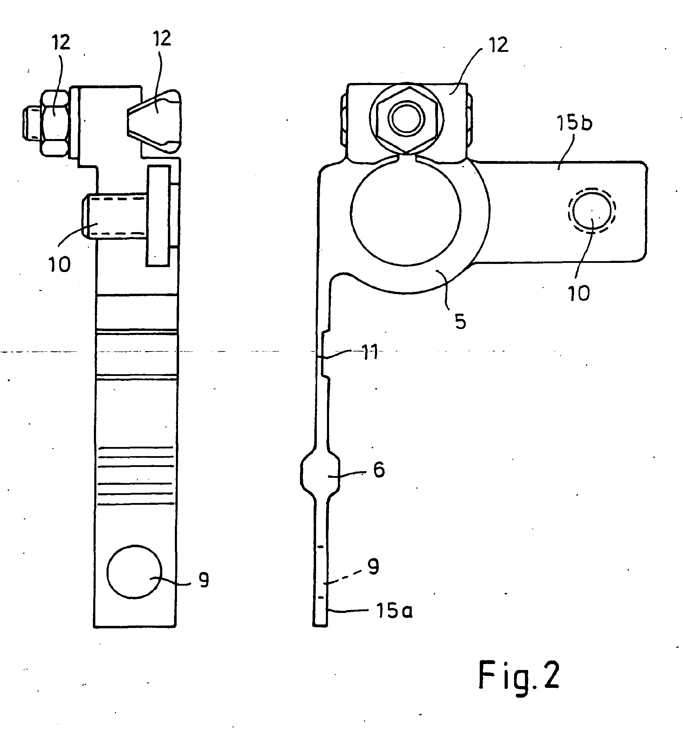

Figur 2 zeigt zum besseren Verständnis das metallische komplette einstückige Batterieklemmenelement 5 mit Stützpunkt 10, Klemmvorrichtung 12, Trennstelle 11, die gegen Herausschieben des abgetrennten Ende des Schenkels vorgesehene Verdikkung 6 sowie die Stromanschlussbohrung 9, an die das Hauptstromkabel angeschlossen werden kann.

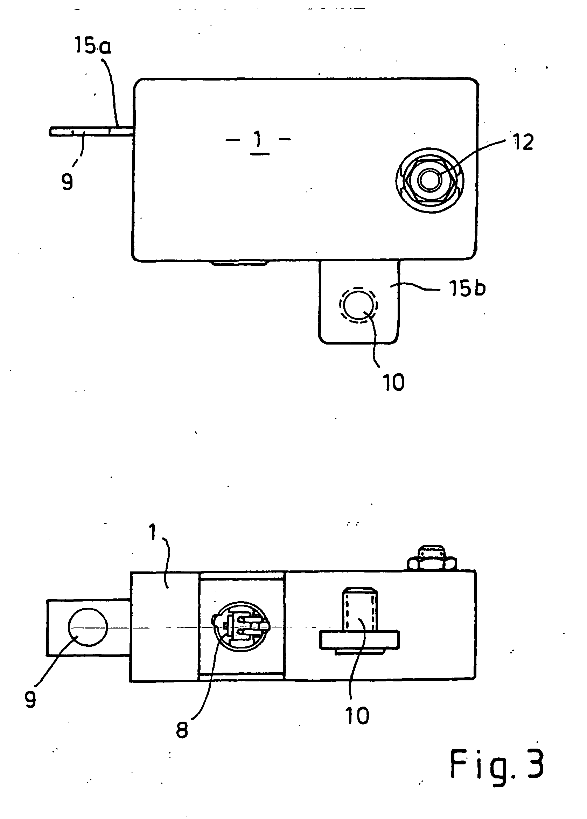

Figur 3 zeigt die komplette äußere Form des pyromechanischen Batteriepoltrennelementes mit Anschluss 9, elektrischen Stützpunkt 10 der Klemmvorrichtung 12, sowie dem elektrischen Zündsteckeranschluss 8.

Funktion: Das komplette pyromechanische Batteriepol-Trennelement wird auf den Pol der Batterie anhand der Klemmschraube 12 spannzangenähnlich fest montiert. An dem elektrischen Stützpunkt 10 können verschiedene Verbraucher mit Kabelösen elektrisch verbunden werden. An der Anschlussöse bzw. Bohrung 9 kann der abzuschaltende Verbraucher angeschlossen werden. Am Steckereingang 8 des pyromechanischen Trennelementes 7 wird der von einer Sensorik kommende Zündstecker eingesteckt. Kommt es beispielweise zu einem Unfall, bei dem die Auslösesensorik infolge der Fahrzeugcrashsignatur anspricht, wird auf den Zündsteckereingang 8 ein elektrischer Zündstromimpuls geschaltet. In dem Trennelement 7 baut sich ein Antriebsdruck auf, der das Trennelement beschleunigt und auf die Trennstelle 11 schießt. Infolge der hohen kinetischen Energie, die beim Auftreffen auf die Stelle 11 frei wird, wird an dieser Stelle die Stromschiene durchschlagen und gemäß Skizze in den Freiraum 4 hineingebogen. Damit ist der Stromkreis von der Batterie über die Batterieklemme 5 zum Anschluss 9 unterbrochen.

## Patentansprüche

1. Pyromechanisches Batteriepol-Trennelement mit einem Gehäuse (1) in dem ein elektrischer Leiter angeordnet ist, mit einem pyrotechnischen Wirkelement (14) mit einem Trennkolben mit Trennelement (7) zum Durchtrennen des elektrischen Leiters an einer Trennstelle (11) und mit einer pyrotechnischen Ladung zum Antrieb des Trennelements (7), wobei die gesamten stromführenden Teile außer dem Wirkelement (14) zu einem einstückigen Batterieklemmenelement (5) zusammengefasst sind,
**dadurch gekennzeichnet,**
**dass** das Batterieklemmenelement (5) zwei rechtwinklig zueinander von einer Klemmvorrichtung (12) zum Anschluss des Batteriepol-Trennelements an eine Batterieklemme abgehende Schenkel (15a, 15b) aufweist, wobei einer der Schenkel (15a, 15b) auf einer von der Klemmvorrichtung (12) abgewandten Seite der Trennstelle (11) eine zwischen Rippen (3) des Gehäuses (1) angeordnete Verdickung (6) aufweist.

2. Batteriepol-Trennelement nach Anspruch 1, **dadurch gekennzeichnet,**
- **dass** auf dem ersten Schenkel (15a) die Trennstelle (11) und ausgehend von der Klemmvorrichtung (12) dahinter ein erstes Befestigungselement (9) zum Anschließen der im Notfall abzuschaltenden Aggregate angeordnet ist, und
- **dass** auf dem zweiten Schenkel (15b) ein zweites Befestigungselement (10) zum Anschließen der im Notfall nicht abzuschaltenden Aggregate angeordnet ist.

3. Batteriepol-Trennelement nach Anspruch 1 oder 2, **dadurch gekennzeichnet, dass** das Gehäuse (1) Versteifungsrippen und/oder Stege (2, 3) aufweist und das Batterieklemmenelement (5) und das Wirkelement (14) in diese Versteifungsrippen und/oder Stege (2, 3) einschiebbar sind.

4. Batteriepol-Trennelement nach Anspruch 2 oder 3, **dadurch gekennzeichnet, dass** Verdickung (6) die am ersten Schenkel (15a) zwischen der Trennstelle (11) und dem ersten Befestigungselement (9) angeordnet ist.

5. Batteriepol-Trennelement nach einem der Ansprüche 2 bis 4, **dadurch gekennzeichnet, dass** das zweite Befestigungselement (10) eine Stützpunktschraube ist.

6. Batteriepol-Trennelement nach einem der Ansprüche 2 bis 5, **dadurch gekennzeichnet, dass** das erste Befestigungselement (9) eine Befestigungsbohrung ist.

7. Batteriepol-Trennelement nach einem der Ansprüche 2 bis 6, **dadurch gekennzeichnet, dass** vom Batterieklemmenelement (5) nur die Befestigungselemente (9, 10) aus dem Gehäuse (1) herausragen.

8. Batteriepol-Trennelement nach einem der Ansprüche 1 bis 7, **dadurch gekennzeichnet, dass** die Schenkel (15a, 15b) des Batterieklemrrenelements (5) in der Art eines Flachbandes ausgebildet sind.

9. Batteriepol-Trennelement nach einem der Ansprüche 1 bis 8, **dadurch gekennzeichnet, dass** das Gehäuse (1) aus einem faserverstärkten Kunststoff hergestellt ist.

## Claims

1. Pyromechanical battery pole disconnect element, comprising a housing (1) in which an electrical conductor is located, a pyrotechnic active element (14) including a breaking piston with a disconnect element (7) to sever the electrical conductor at an disconnect point (11), and a pyrotechnic charge to drive the disconnect element (7), whereby all the current-conducting components except the active element (14) are combined to form a one-piece battery terminal element (5), **characterized in that** the battery terminal element (5) has two arms (15a, 15b) oriented at essentially right angles relative to each other extending from a clamping device (12) for connecting the battery pole disconnect element to a battery terminal whereby one of the arms (15a, 15b) has an enlarged segment (6) located between ribs (3) of the housing (1) on the side of the disconnect point (11) opposite to the clamping device (12).

2. Battery pole disconnect element according to claim 1 **characterized in that** the disconnect point (11) is located on the first arm (15a) and beyond the clamping device (12) and behind thereof a first attachment element (9) is located on this arm for connection of the systems which are to be disconnected in an emergency, and that a second attachment element (10) is located on the second arm (15b) for connecting of the systems which are not to be disconnected in an emergency.

3. Battery pole disconnect element according to claim 1 or 2, **characterized in that** the housing (1) has bracing ribs and/or link segments (2, 3) and that the battery terminal element (5) and the active element (14) can be inserted into these bracing ribs and/or link segments (2, 3).

4. Battery pole disconnect element according to claim 2 or 3, **characterized in that** the enlarged segment (6) is located on the first arm (15a) between the disconnect point (11) and the first attachment element (9).

5. Battery pole disconnect element according to one of the claims 2 - 4, **characterized in that** the second attachment element (10) is a support screw.

6. Battery pole disconnect element according to one of the claims 2 - 5 **characterized in that** the first attachment element (9) is an attachment hole.

7. Battery pole disconnect element according to one the claims 2 - 6, **characterized in that** only the attachment elements (9, 10) protrude from the battery terminal element (5) out of the housing (1).

8. Battery pole disconnect element according to one of the claims 1 - 7, **characterized in that** the arms (15a, 15b) of the battery terminal element (5) are ribbon-shaped.

9. Battery pole disconnect element according to one of the claims 1 - 8, **characterized in that** the housing (1) is fabricated out of a fiber-reinforced plastic.

## Revendications

1. Elément de coupure pyrotechnique pour pôle de batterie doté d'un boîtier (1) dans lequel est disposé un conducteur électrique, doté d'un élément actionneur pyrotechnique (14) ayant un piston de coupure pourvu un élément de coupure (7) destiné à séparer le conducteur électrique dans une zone de coupure (11), et doté d'une charge pyrotechnique destinée à entraîner l'élément de coupure (7), toutes les pièces électroconductrices à l'exception de l'élément actionneur (14) étant regroupées pour former un élément de borne de batterie (5) d'une seule pièce,
**caractérisé en ce**
**que** l'élément de borne de batterie (5) comporte deux branches (15a, 15b) perpendiculaires entre elles partant d'un dispositif de serrage (12) servant au branchement de l'élément de coupure pour pôle de batterie à une borne de batterie, une des branches (15a, 15b) présentant sur un côté de la zone de coupure (11) opposé au dispositif de serrage (12) une surépaisseur (6) disposée entre des nervures (3) du boîtier (1).

2. Elément de coupure pour pôle de batterie selon la revendication 1, **caractérisé en ce**
- **que** sur la première branche (15a) sont disposés la zone de coupure (11) et, derrière cette dernière en partant du dispositif de serrage (12), un premier élément de fixation (9) destiné au branchement des agrégats à couper en cas d'urgence, et
- **que** sur la deuxième branche (15b) est disposé un deuxième élément de fixation (10) destiné au branchement des agrégats à ne pas couper en cas d'urgence.

3. Elément de coupure pour pôle de batterie selon la revendication 1 ou 2, **caractérisé en ce que** le boîtier (1) présente des nervures de renforcement et/ou des cloisonnements (2, 3) et **en ce que** l'élément de borne de batterie (5) et l'élément actionneur (14) peuvent être insérés dans ces nervures de renforcement et/ou cloisonnements (2, 3).

4. Elément de coupure pour pôle de batterie selon la revendication 2 ou 3, **caractérisé en ce que** la surépaisseur (6) sur la première branche (15a) est disposée entre la zone de coupure (11) et le premier élément de fixation (9).

5. Elément de coupure pour pôle de batterie selon l'une quelconque des revendications 2 à 4, **caractérisé en ce que** le deuxième élément de fixation (10) est une vis de point d'appui.

6. Elément de coupure pour pôle de batterie selon l'une quelconque des revendications 2 à 5, **caractérisé en ce que** le premier élément de fixation (9) est un alésage de fixation.

7. Elément de coupure pour pôle de batterie selon l'une quelconque des revendications 2 à 6, **caractérisé en ce que** seuls les éléments de fixation (9, 10) de l'élément de borne de batterie (5) font saillie du boîtier (1).

8. Elément de coupure pour pôle de batterie selon l'une quelconque des revendications 1 à 7, **caractérisé en ce que** les branches (15a, 15b) de l'élément de borne de batterie (5) ont la forme d'un bandeau plat.

9. Elément de coupure pour pôle de batterie selon l'une quelconque des revendications 1 à 8, **caractérisé en ce que** le boîtier (1) est réalisé dans un matériau synthétique renforcé par des fibres.
